# EUROPÄISCHE PATENTANMELDUNG

(11) **EP 1 739 559 A2**
(43) Veröffentlichungstag der Anmeldung: **03.01.2007**
(21) Anmeldenummer: 06012145.6
(22) Anmeldetag: 13.06.2006
(51) Int. Cl.: G06F 11/36

(54) **Behandlung von Fehlerereignissen bei einem tragbarem Datenträger**

(30) Priorität: 20.06.2005 DE 10528394
(71) Anmelder: Giesecke & Devrient GmbH, 81677 München (DE)
(72) Erfinder: Hosseini, Manouchehr, 80992 München (DE)

(57) **Zusammenfassung**

Die Erfindung schafft ein Verfahren zur Behandlung von Fehlerereignissen bei einem tragbaren Datenträger (100), der eine Mehrzahl von Anwendungsprogrammen (120) aufnehmen kann, und in dem ein als Anwendungsprogramm gestaltetes Diagnoseprogramm (110) installiert ist. Das Verfahren weist die Schritte auf: Erfassen eines Fehlerereignisses und Übergeben von Fehlerinformationen, die mit dem aufgetretenen Fehlerereignis in Beziehung stehen, an das Diagnoseprogramm (110). Gemäß der Erfindung wird ein Fehlerereignis behandelt, das bei einem in dem Datenträger (100) installierten und im Datenträger ablaufenden vorbestimmten Anwendungsprogramm (120) auftritt.

## Beschreibung

Die Erfindung betrifft ein Verfahren zur Behandlung von Fehlerereignissen bei einem tragbaren Datenträger, der eine Mehrzahl von Anwendungen aufnehmen kann, und in dem ein als Anwendungsprogramm gestaltetes Diagnoseprogramm installiert ist, wobei das Verfahren insbesondere die Schritte nach dem Oberbegriff von Anspruch 1 aufweist.

Tragbare Datenträger, die eine Mehrzahl von Anwendungsprogrammen aufzunehmen vermögen, sind z.B. unter der Marke Java Card™ der Firma Sun Microsystems, Inc., Palo Alto, USA bekannt. Das Dokument *"*Java Card™ 2.2 Runtime Environment (JCRE) Specification", Juni 2002, herausgegeben von der Firma Sun Microsystems, Inc., Palo Alto, USA, im Internet verfügbar unter *http:*//*java.sun.com*/*products*/*javacard,* beschreibt die in einer *Java Card* bereitgestellte Umgebung zur Ausführung solcher Anwendungsprogramme. Die Anwendungsprogramme in einer *Java Card* werden als Applets (*Java Card Applets)* bezeichnet.

Eine Reihe von Anwendungsprogrammen sammeln während ihres Ablaufens Informationen, so genannte Trace-Daten, die Aufschluss über des Programmablauf geben können. Allerdings sind diese Trace-Daten nicht ohne Weiteres auslesbar. Vielmehr sind zum Auslesen der Trace-Daten fundierte Programmierkenntnisse und Kenntnisse über den Aufbau des ablaufenden Anwendungsprogramms erforderlich.

Aus EP 1492 008 A2 (510933) ist ein Verfahren nach dem Oberbegriff von Anspruch 1 bekannt. Genauer ist aus dem Dokument ein Verfahren zur Behandlung eines Fehlerereignisses bei einem Datenträger bekannt, der eine Mehrzahl von Anwendungsprogrammen aufzunehmen vermag, und in dem ein als Anwendungsprogramm ausgestaltetes Diagnoseprogramm installiert ist. Das Verfahren ist ausschließlich auf Fehlerereignisse gerichtet, die bei der Installation eines Anwendungsprogramms in dem tragbaren Datenträger auftreten oder auftreten können, das also während der Ausführung des Verfahrens noch nicht im Datenträger installiert ist und im Datenträger somit noch nicht lauffähig ist. Das Anwendungsprogramm weist eine Installationsroutine auf, mit der sich das Anwendungsprogramm im Datenträger installierten lässt. Das Verfahren weist die folgenden beiden Schritte auf. In einem ersten Schritt wird ein Fehlerereignis, das in der Installationsroutine des zu installierenden Anwendungsprogramms auftritt, erfasst. In einem zweiten Schritt werden Informationen, die mit dem aufgetretenen Fehlerereignis in Beziehung stehen, von der Installationsroutine an das Diagnoseprogramm übertragen. Fehlerereignisse, die bei einem bereits installierten Anwendungsprogramm auftreten, während dieses abläuft, können mit dem Verfahren aus EP 1492 008 A2 nicht behandelt werden.

Aus WO 03/025753 (510698) ist ein Verfahren zum Erzeugen einer zur Fehlersuche vorgesehenen Nachricht während der Ausführung eines Programms auf einem tragbaren Datenträger bekannt. Bei dem Verfahren wird, wenn ein Fehlerereignis erkannt wird, ein Datensatz erzeugt, der später als Nachricht zur Fehlersuche ausgelesen werden kann. Zur Erzeugung des Datensatzes ist in einer Entwurfsphase des Datenträgers eine spezifische Fehlerbehandlungsroutine im Datenträger installiert. In den Datensatz werden zwei Daten aufgenommen, nämlich der Stand des Programmzählers, bei dem das Fehlerereignis aufgetreten ist, sowie eine mit dem Programmzählerstand verbundene Quelltext-bezogene Angabe. Die Quelltext-bezogene Angabe kann z.B. die Zeilennummer des Quellcodes oder der Name einer Methode oder Variablen sein, der bzw. die bei dem Programmzählerstand zur Ausführung anstand, bei dem das Fehlerereignis aufgetreten ist. Das Verfahren aus WO 03/025753 ermöglicht es, für ein Programm, das gerade ausgeführt wird, eine Fehlernachricht zu erzeugen. Allerdings ist hierzu eine spezifische Fehlerbehandlungsroutine erforderlich, die dazu in der Lage ist, auf den Programmzähler und die Quelltext-bezogene Angabe (z.B. Zeilennummer im Quelltext bzw. Name einer Methode oder Variable) zuzugreifen. Hierzu sind in der Regel nur systemnahe Routinen in der Lage, nicht aber beispielsweise beliebige Anwendungsprogramme. Systemnahe Routinen lassen sich im Unterschied zu Anwendungsprogrammen nur mit größerem Aufwand in einem Datenträger installieren.

Der Erfindung liegt die Aufgabe zu Grunde, ein flexibles Verfahren zu schaffen, mit dem sich bei Anwendungsprogrammen, die in einem Datenträger installiert sind und dort ablaufen, Fehlerereignisse behandeln lassen.

Die Aufgabe wird gelöst durch einen Verfahren nach Anspruch 1. Vorteilhafte Ausgestaltungen der Erfindung sind in den abhängigen Ansprüchen angegeben.

Das erfindungsgemäße Verfahren gemäß dem unabhängigen Anspruch 1 geht von einem tragbaren Datenträger aus, der eine Mehrzahl von Anwendungsprogrammen aufnehmen kann, und in dem ein als Anwendungsprogramm gestaltetes Diagnoseprogramm installiert ist. Das Verfahren weist die Schritte auf: Erfassen eines Fehlerereignisses, und Übergeben von Fehlerinformationen, die mit dem aufgetretenen Fehlerereignis in Beziehung stehen, an das Diagnoseprogramm. Gemäß der Erfindung ist im Datenträger zusätzlich zum Diagnoseprogramm mindestens ein weiteres Anwendungsprogramm installiert, so dass es ablauffähig ist. Weiter wird gemäß der Erfindung ein Fehlerereignis behandelt, das bei einem solchen, in dem Datenträger installierten und im Datenträger ablaufenden vorbestimmten Anwendungsprogramm auftritt. Im Gegensatz zum Verfahren aus EP 1492 008 A2, das eine Fehlerbehandlung lediglich bei der Installation des Anwendungsprogramms ermöglicht, ermöglicht das erfindungsgemäße Verfahren eine Fehlerbehandlung bei beliebigen vorbestimmten Anwendungsprogrammen, die bereits im Datenträger installiert und lauffähig sind. Das erfindungsgemäße Verfahren kann daher insbesondere jederzeit an einem lauffähigen Datenträger durchgeführt werden.

Daher ist gemäß Anspruch 1 ein flexibles Verfahren geschaffen, mit dem sich bei Anwendungsprogrammen, die in einem Datenträger installiert sind und dort ablaufen, Fehlerereignisse behandeln lassen.

Im Vergleich zum Verfahren aus WO 03/025753 hat das erfindungsgemäße Verfahren zudem den Vorteil, dass es besonders flexibel ist. Denn das Diagnoseprogramm ist als Anwendungsprogramm gestaltet, so dass im Gegensatz zu dem Verfahren aus WO 03/025753 keine systemnahe Fehlerbehandlungsroutine erforderlich ist.

Vorzugsweise werden die Fehlerinformationen durch das ablaufende Anwendungsprogramm gesammelt, bevor sie an das Diagnoseprogramm übergeben werden, z.B. in Form von während des Programmablaufs laufend gesammelten Daten, d.h. so genannten Trace-Daten.

Vorzugsweise werden die Fehlerinformationen durch das Diagnoseprogramm in einem Diagnose-Pufferspeicher - z.B. einem so genannten Trace-Buffer - abgespeichert.

Die Fehlerinformationen werden vorzugsweise über eine durch das Diagnoseprogramm bereitgestellte Schnittstelle (Shareable Interface) vom vorbestimmten Anwendungsprogramm an das Diagnoseprogramm übergeben. Die Schnittstelle kann beispielsweise ein Shareable Interface nach dem *Java Card™* Standard sein. Insbesondere kann das Diagnoseprogramm, um die Schnittstelle zu verwirklichen, ein Shareable Interface Objekt nach dem *Java Card™* Standard bereitstellen, über das andere Anwendungsprogramme auf das Diagnoseprogramm zugreifen können.

Gemäß einer ersten Weiterbildung der Erfindung greift ein in einem Terminal implementiertes erstes Steuerprogramm mit einem ersten Kommando auf den Datenträger zu. Auf das erste Kommando hin wird das vorbestimmte Anwendungsprogramm zum Ablaufen gebracht, und das Erfassen eines Fehlerereignisses und das Übergeben von Fehlerinformationen an das Diagnoseprogramm werden veranlasst.

Gemäß einer zweiten Weiterbildung der Erfindung greift ein in einem Terminal implementiertes zweites Steuerprogramm mit einem zweiten Kommando auf den Datenträger zu. Auf das zweite Kommando hin wird eine Fehlernachricht mit Fehlerinformationen oder daraus abgeleiteten Sekundärinformationen von dem Diagnoseprogramm an das zweite Steuerprogramm geliefert.

Die beiden Weiterbildungen können auch miteinander kombiniert werden.

Das erste bzw. zweite Steuerprogramm ist außerhalb des Datenträgers implementiert, in einem Terminal für den Datenträger, beispielsweise einem Kartenterminal (Card Acceptance Device CAD) wie einem Chipkartenleser oder eine Computer mit Chipkartenleser.

Falls für die Kommunikation zwischen dem Terminal und dem Datenträger nur ein einziger Kommunikationskanal zur Verfügung steht, können das erste Steuerprogramm, das ein Erfassen und Speichern von Fehlerinformationen bewirkt, und das zweite Steuerprogramm, das ein Auslesen einer Fehlernachricht bewirkt, nur nacheinander auf den Datenträger zugreifen. Falls für die Kommunikation zwischen dem Terminal und dem Datenträger jedoch mindestens zwei Kommunikationskanäle zur Verfügung stehen, können das erste und das zweite Steuerprogramm gleichzeitig auf den Datenträger zugreifen, so dass ein stetig abwechselndes Erfassen/Speichern und Auslesen von Fehlerinformationen möglich ist. Als Kommunikationskanäle können insbesondere logische Kanäle bereitstehen.

Gemäß Varianten zu den beiden Weiterbildungen greift das externe Steuerprogramm mittels Fernabfrage auf den Datenträger zu. Die Fernabfrage kann, bei einem Datenträger in Gestalt einer Java Card, insbesondere als Java Card Remote Methode Invocation (JCRMI) gestaltet sein, wie sie beispielsweise in Kapitel 8 der *Java Card™ 2.2 Runtime Environment (JCRE) Specification* beschrieben ist. In diesem Fall wirkt der Datenträger als Remote Method Server und das externe Steuerprogramm als Remote Method Client.

Vorzugsweise wird, falls gemäß der Fehlernachricht ein Fehlerereignis beim Ablaufen des vorbestimmten Anwendungsprogramms aufgetreten ist, eine Fehlerbehandlung veranlasst. Beispielsweise wird das vorbestimmte Anwendungsprogramm vom Datenträger gelöscht. Alternativ wird der Fehler, der dem Fehlerereignis zu Grunde liegt, korrigiert.

Wahlweise kann das Diagnoseprogramm vom Datenträger gelöscht werden, sobald das vorbestimmte Anwendungsprogramm ausreichend auf Fehler überprüft worden ist bzw. sobald alle gewünschten, im Datenträger implementierten Anwendungsprogramme ausreichend auf Fehler überprüft worden sind. Wahlweise werden Bestandteile des vorbestimmten Anwendungsprogramm, die einzig dazu dienen, die Kommunikation mit dem DiagnoseProgramm zu ermöglichen, aus dem vorbestimmten Anwendungsprogramm gelöscht, nachdem es ausreichend auf Fehler überprüft worden ist.

In einem erfindungsgemäßen Datenträger ist das obenstehend beschriebene Diagnoseprogramm, gegebenenfalls einschließlich eines im Diagnoseprogramm vorgesehenen oder dem Diagnoseprogramm zugeordneten Diagnose-Pufferspeichers, implementiert. Der Datenträger ist wahlweise ein tragbarer Datenträger wie eine Chipkarte, insbesondere Java Card, mit einem Kartenkörper in einem beliebigen standardisierten oder nicht standardisierten Format. Wahlweise ist der Datenträger ein volumiges Token, das elektronisch im Wesentlichen wie eine Chipkarte gestaltet ist, dabei wahlweise zusätzliche Schnittstellen hat wie z.B. USB. Programmcode für einen erfindungsgemäßen Datenträger wird wahlweise in einem Computermedium wie Computerspeicher, Diskette, CD, Personalisierungsanlage oder dergleichen vorgehalten, um später im Datenträger implementiert zu werden.

Im Folgenden wird die Erfindung an Hand von Ausführungsbeispielen und unter Bezugnahme auf die Zeichnung näher erläutert, in der zeigen:
- Fig.1: einen Datenträger mit - als Diagnoseprogramm - einem Trace-Applet sowie - als vorbestimmtem Anwendungsprogramm - einem Test-Applet, dessen Fehlerereignisse mit dem Trace-Applet erfasst werden sollen, gemäß einer Ausführungsform der Erfindung;
- Fig. 2: den Datenträger aus Fig.1 und ein Terminal, gemäß einer Ausführungsform der Erfindung.

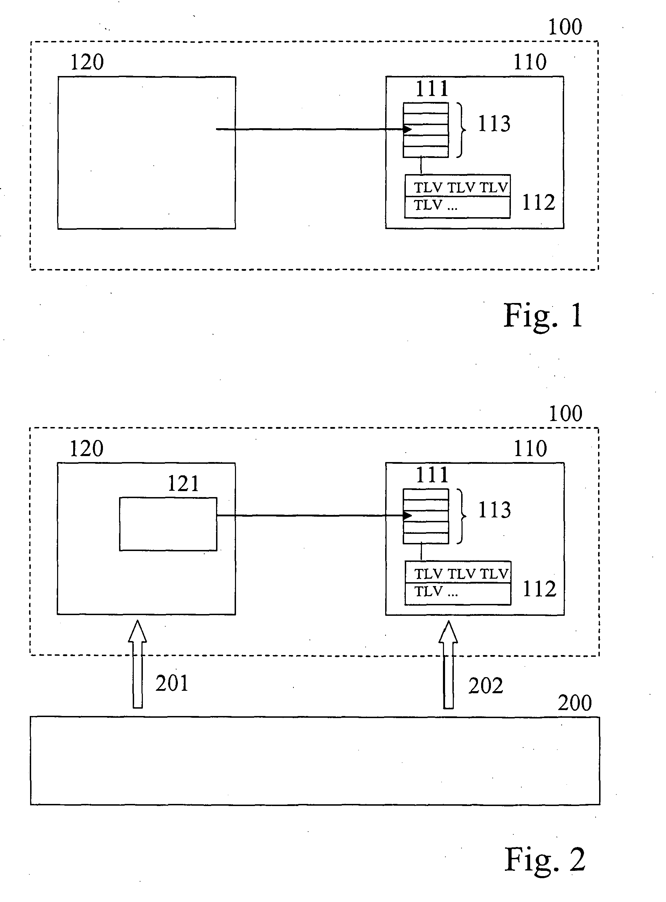

Fig. 1 veranschaulicht in einer schematischer Darstellung als beispielhaften Datenträger eine Java Card 100 gemäß einer Ausführungsform der Erfindung. Fig. 1 zeigt genauer eine Java Card 100, in der zumindest zwei Anwendungsprogramme abgespeichert sind, nämlich ein Trace-Applet 110 als Diagnoseprogramm sowie ein Test-Applet 120, dessen Fehlerereignisse mit dem Trace-Applet 110 erfasst werden sollen. Zudem können in der Java-Card 100 weitere Applets wie das Test-Applet 120 abgespeichert sein.

Zusätzlich sind in der Java Card 100 herkömmliche Komponenten einer Java Card implementiert, die in Fig.1 nicht dargestellt sind. Zu den Komponenten zählen eine Ausführungsumgebung (Laufzeitumgebung) mit einer virtuellen Java-Card-Maschine sowie eine Kontakteinrichtung (kontaktbehaftet oder/und kontaktlos) zur Kommunikation mit einem externen Terminal wie z.B. einem Kartenlesegerät (Card Acceptance Device CAD), das wiederum an einen Computer angeschlossen sein kann.

Das Trace-Applet 110 ist im Beispiel aus Fig.1 in einem eigenen Kontext untergebracht, der sich von Kontexten anderer Applets unterscheidet. Das Trace-Applet 110 enthält, als Schnittstelle zu anderen Applets, ein Shareable Interface, aus dem heraus ein Shareable Interface Objekt SIO 111 angelegt ist. Im Shareable Interface sind eine Reihe von Methoden 113 des Trace-Applet 110 bereitgestellt, die durch andere Applets aus anderen Kontexten genutzt werden dürfen. Weiter ist dem Trace-Applet 110 als Diagnose-Pufferspeicher einen Trace-Buffer 112 zugeordnet, in dem Fehlerinformationen, die über das Shareable Interface Objekt SIO 111 an das Trace-Applet 110 übertragen worden sind, abgespeichert werden.

Der Trace-Buffer 112 kann beispielsweise eine Größe von 256 Byte haben, je nach Anforderungen und zur Verfügung stehenden Ressourcen. Daten werden im Trace-Buffer 112 im Format
"<tag><type><value><tag><type><value> ...."
abgelegt, wobei die eigentlichen Daten jeweils im Feld <value> abgelegt werden und der Datentyp der Daten im Feld <value> im vorangehenden Feld <type> angegeben ist.

Die Methoden im Shareable Interface stellen Funktionalitäten bereit, um die Werte vorbestimmter Parameter aus einem Applet auszulesen. Mit den beispielhaften Methoden
public void trace (byte bTag);
public void trace (byte bTag, byte bValue);
public void trace (byte bTag, boolean zValue);
public void trace (byte bTag, short sValue);
public void trace (byte bTag, int iValue);

lassen sich beispielsweise die Werte der Parameter bValue vom Typ byte, zValue vom Typ boolean, sValue vom Typ short und iValue vom Typ int eines Applet, das auf die jeweilige Methode zugreift, auslesen und im weiter oben angegebenen Format im Trace-Buffer 112 abspeichern.

Das Test-Applet 120, dessen Fehlerinformationen bei eventuell auftretenden Fehlerereignissen durch das Trace-Applet 110 erfasst und gespeichert werden sollen, hat in seinem Quellcode das Shareable Interface, aus dem das Shareable Interface Objekt 111 erzeugt worden ist, importiert, damit es später auf das Shareable Interface zugreifen kann.

Damit das Test-Applet 120 das Shareable Interface nutzen kann, fordert das Test-Applet 120 vom Trace-Applet 110 eine Referenz auf das Shareable Interface Objekt 111 an, indem das Test-Applet 120 die API (Application Programing Interface) Methode aus der Java Card Klassenbibliothek API
JCSystem.getAppletShareableInterfaceObject(...)
aufruft. Das Trace-Applet 110 sendet daraufhin die angeforderte Referenz an das Test-Applet 120. Mit der Referenz kann das Test-Applet 120 über das Shareable Interface Objekt 111 die Methoden des Trace-Applet 110 nutzen, beispielsweise die oben angeführten Methoden, und somit Fehlerinformationen durch das Trace-Applet 110 erfassen und speichern lassen.

Fig. 2 zeigt den Datenträger 100 aus Fig. 1 und eine Terminal (Kartenterminal) 200. Das Terminal 130 kann beispielsweise ein Kartenleser (Card Acceptance Device CAD) oder ein Computer (z.B. PC oder Server) mit einem zwischen den Computer und die Java Card gekoppelten Kartenleser sein.

Im Folgenden wird das Erfassen und Abspeichern von Fehlerinformationen bei dem Aufbau aus Fig. 2 beschrieben.

Das Terminal 200 sendet ein Kommando 210 an den Datenträger 100, mit dem das Test-Applet 120 zum Ablaufen gebracht wird, beispielsweise das Kommando invoke aus der Java Card API. Wahlweise werden statt des ganzen Test-Applet 120 nur einzelne Bestandteile daraus, z.B. einzelne Methoden bzw. eine einzelne Methode, zum Ablaufen gebracht, wobei der nachfolgend beschriebene Ablauf dann analog gilt. Daraufhin beginnt das Test-Applet 120 (bzw. die Methode) abzulaufen. Sobald das Test-Applet 120 (bzw. die Methode) abläuft, fordert es wie oben beschrieben eine Referenz auf das Shareable Interface Objekt 111 des Trace-Applet 110 an und bekommt die Referenz vom Trace-Applet bereitgestellt. Mit der Referenz nutzt das Test-Applet 120 die Methoden des Trace-Applet 110, um eventuell auftretende Fehlerereignisse im Programmablauf des Test-Applet 120 aufzufangen, zugehörige Fehlerinformationen durch das Trace-Applet 110 erfassen zu lassen und im Trace-Buffer 112 abspeichern zu lassen.

Bei einer Variante des soeben beschriebenen Verfahrens zum Erfassen und Abspeichern von Fehlerinformationen wirkt der Datenträger als JCRMI (Java Card Remote Method Invocation; Java Card Fernaufruf) Server und das Terminal 200 als JCRMI Client.

Bei dieser Variante sind ein oder mehrere oder alle der im Test-Applet 120 gespeicherten Objekte wie z.B. Methoden, Variablen etc. exportiert und dadurch als Remote-Objekte 121 gekennzeichnet. Die Remote-Objekte 121 sind für das Terminal 200 mittels Fernaufruf RMI (Remote Method Invocation) zugänglich und nutzbar. Um ein Remote-Objekt 121 des Test-Applet 120 zum Ablauf zu bringen, sendet das Terminal 200 ein Kommando select an das gewünschte Remote-Objekt 121 des Test-Applet 120. Hierauf sendet das Remote-Objekt 121 seinen Remote-Objekt-Identifier ROI an den Kartenleser 200, der nun das Remote-Objekt 121 mittels RMI ablaufen lassen kann. Im weiteren Verlauf werden, wie weiter oben beschrieben, über das Shareable Interface Objekt 111 Fehlerinformationen durch das Trace-Applet erfasst und im Trace-Buffer 112 abgespeichert.

Auf analoge Weise, wie das Test-Applet 120 zum Ablauf gebracht werden kann, können später die Fehlerinformationen oder daraus abgeleitete Sekundärinformationen aus dem Trace-Buffer 112 des Trace-Applet 110 ausgelesen werden. Zum Auslesen des Trace-Buffer 112 sendet das Terminal 200 ein Kommando 202 an das Trace-Applet, beispielsweise invoke aus der Java Card API. Alternativ kann der Trace-Buffer 112 über Java Card RMI ausgelesen werden. In diesem Fall wird das Kommando 202 select an das Trace-Applet 110 gesendet, und dieses sendet einen ROI an den Kartenleser 200. In beiden Fällen kann das Terminal auf das Senden des Kommandos 202 hin die Fehlerinformationen oder daraus abgeleitete Sekundärinformationen aus dem Trace-Buffer 112 des Trace-Applet 110 auslesen.

## Patentansprüche

1. Verfahren zur Behandlung von Fehlerereignissen bei einem tragbaren Datenträger (100), der eine Mehrzahl von Anwendungsprogrammen (120) aufnehmen kann, und in dem ein als Anwendungsprogramm gestaltetes Diagnoseprogramm (110) installiert ist, wobei das Verfahren die Schritte aufweist:
- Erfassen eines Fehlerereignisses und
- Übergeben von Fehlerinformationen, die mit dem aufgetretenen Fehlerereignis in Beziehung stehen, an das Diagnoseprogramm (110),
**dadurch gekennzeichnet, dass**
ein Fehlerereignis behandelt wird, das bei einem in dem Datenträger (100) installierten und im Datenträger (100) ablaufenden vorbestimmten Anwendungsprogramm (120) auftritt.

2. Verfahren nach Anspruch 1, wobei die Fehlerinformationen durch das ablaufende vorbestimmte Anwendungsprogramm (120) gesammelt werden, bevor sie an das Diagnoseprogramm (110) übergeben werden.

3. Verfahren nach Anspruch 1 oder 2, wobei die Fehlerinformationen durch das Diagnoseprogramm (110) in einem Diagnose-Pufferspeicher (112) abgespeichert werden.

4. Verfahren nach einem der Ansprüche 1 bis 3, wobei die Fehlerinformationen über eine durch das Diagnoseprogramm (110) bereitgestellte Schnittstelle (111) vom vorbestimmten Anwendungsprogramm (120) an das Diagnoseprogramm (110) übergeben werden.

5. Verfahren nach einem der Ansprüche 1 bis 4, wobei ein in einem Terminal (200) implementiertes erstes Steuerprogramm mit einem ersten Kommando auf den Datenträger (100) zugreift, wobei auf das erste Kommando hin das vorbestimmte Anwendungsprogramm (120) zum Ablaufen gebracht wird und das Erfassen eines Fehlerereignisses und das Übergeben von Fehlerinformationen an das Diagnoseprogramm (110) veranlasst werden.

6. Verfahren nach einem der Ansprüche 1 bis 5, wobei ein in einem Terminal (200) implementiertes zweites Steuerprogramm mit einem zweiten Kommando auf den Datenträger (100) zugreift, wobei auf das zweite Kommando hin eine Fehlernachricht mit Fehlerinformationen oder daraus abgeleiteten Sekundärinformationen von dem Diagnoseprogramm (110) an das zweite Steuerprogramm geliefert wird.

7. Verfahren nach 6, wobei, falls gemäß der Fehlernachricht ein Fehlerereignis beim Ablaufen des vorbestimmten Anwendungsprogramms aufgetreten ist, eine Fehlerbehandlung veranlasst wird.

8. Verfahren nach einem der Ansprüche 5 bis 7, wobei das Steuerprogramm mittels Fernabfrage auf den Datenträger (100) zugreift.

9. Datenträger mit einem Diagnoseprogramm (110) nach einem der Ansprüche 1 bis 8.

10. Computermedium mit Programmcode nach einem der Ansprüche 1 bis 8 zur Installation in einem Datenträger.
